# EUROPEAN PATENT SPECIFICATION

(11) **EP 0 773 196 B1**
(45) Date of publication and mention of the grant of the patent: **18.07.2001**
(21) Application number: 96115533.0
(22) Date of filing: 27.09.1996
(51) Int. Cl.: C03C 14/00, C08K 3/40, B29B 13/02

(54) **Three-component glass/polymer tri-blends**
Dreikomponenten-Glas-/Polymer-Mischungen
Mélanges polymères/verre à composants triples

(30) Priority: 06.10.1995 US 5070
(43) Date of publication of application: 14.05.1997
(73) Proprietor: CORNING INCORPORATED, Corning, N.Y. 14831 (US)
(72) Inventor: Pierson, Michelle Diane, Corning Incorporated, Corning, NY 14831 (US)
(74) Representative: Marchant, James Ian

(56) References cited:
- EP-A- 0 643 097
- US-A- 3 732 181
- US-A- 5 043 369
- US-A- 5 183 607
- US-A- 5 328 613
- US-A- 5 367 012
- US-A- 5 507 990

## Description

### FIELD OF THE INVENTION

The invention relates to glass-polymer blends containing low temperature glasses and high temperature polymers.

### BACKGROUND OF THE INVENTION

It is generally known that low temperature polymers can be made more heat stable by blending such polymers with higher temperature polymers to form a polymer composite or alloy. Polymer composites are typically prepared from materials of two separate origins by dispersing one solid phase in a continuous matrix of another phase. Mostly, polymer composites consist of a base polymer reinforcing fibers, fillers, and/or whiskers. In addition, polymer composites may contain additives such as plasticizers, colorants, flame retardants, as well as stabilizers against heat and/or sunlight.

In the preparation of polymer blends, in addition to one phase being fluid as with conventional composites, the second phase can also be fluid, either as a melt or as a polymerizing monomer. Also, unlike conventional polymer composites, in blends, phase reversal or inversion may be achieved, depending on the relative concentrations and viscosities of the two polymers. Thus, from a state wherein one component is continuous in phase, a polymer blend can comprise a system which is continuous with respect to the second phase or one in which both phases are continuous such that one component can become enclosed in the second component and vice versa. Accordingly, where the properties of the two polymers are widely different, extreme changes in mechanical behavior can be experienced in the resulting blend.

Blends and alloys consisting of a combination of two or more polymeric resin systems where at least one of the polymers is present in a concentration greater than 5% by volume are well known to the art. As stated above, blends are mixtures of two or more resins which are blended, customarily in the molten state, to form new materials. Unlike copolymers, grafts, or interpenetrating polymer networks, no chemical synthesis or formation of new covalent bonds need occur. Blends have been designated as either miscible or immiscible depending upon the number of phases present.

Miscible or soluble blends comprise one phase with one glass transition temperature (Tg), wherein individual polymer segments are intimately blended with some specific chemical or physical attraction taking place between dissimilar polymer chains, e.g., hydrogen bonding or donor-acceptor. In contrast, immiscible blends consist of two or more discrete phases (continuous and disperse) of two or more Tgs. Completely immiscible blends have limited product potential because of lack of adhesion at the polymer interface. Compatibilizers may be added to such blends to make useful alloys.

Most commercially-marketed resin alloys are formed via some type of melt mixing utilizing a continuous-type intensive mixer or an extruder. In this process, two or more polymers in pellet or powder form are generally premixed or metered into an extruder (a single screw or a multiscrew), or into a continuous-type intensive mixer, fluxed for a brief period, and then shaped into pellets from strands or diced from sheets.

Inorganic glasses can exhibit many desirable properties; for example, high elastic modulus, abrasion resistance, stain resistance, thermal stability, inertness to solvents, low coefficient of thermal expansion, and low permeability to moisture and gases. On the other hand, organic polymers which are generally known to be poor in the above properties, can demonstrate such advantageous characteristics as high elasticity, flexibility, toughness, light weight, and ease in shaping, which properties are generally lacking in inorganic glasses. Glass/polymer blends attempt to combine the properties of inorganic glasses and those of organic polymers. Glass polymer composites, which may be regarded as multi-phase materials of two or more components in which the polymer comprises the continuous phase, can be considered as containing glass fillers or reinforcing agents. Filled plastic products customarily consist of organic polymers enveloping discrete organic or inorganic particles, flakes, fibers, whiskers, or other configurations of materials. These filler materials may be incorporated principally for the purpose of reducing the overall cost of the product without seriously undermining the properties of the polymer. Similarly, the filler materials may be included to impart some improvement to a particular physical property exhibited by the polymer. For example, ceramic and glass fibers have been entrained in polymer bodies to provide reinforcement to the composites. The strength demonstrated by those products is primarily dependent upon mechanical bonding between the inorganic fibers and the organic polymers as well as alignment of the reinforcement in the test direction.

In recent years, composite bodies consisting of inorganic glasses exhibiting low transition temperatures and organic polymers have been disclosed which exhibit the combined properties of glasses and polymers have been disclosed. For example, U. S. Patent No. 3,732,181 describes seven general methods by which glass in the form of fibers, films, flakes, powders, or sheets is combined with a polymer to form a composite mixture which can be formed into a desired configuration through a variety of shaping means. As disclosed therein, the ratio of polymer-to-glass may range from 0.1:99.9 to 99.9:0.1 on a volume basis, but more typically, about 5-66% by volume. The reference also discloses three broad glass compositions exhibiting properties which render the glasses suitable for use in glass-plastic composite articles, namely:
(a) PbO + P₂O₅≥95 mole %, wherein PbO constitutes 20-80 mole %;
(b) PbO+R₂O (alkali metal oxides) + ≥95 mole %, wherein PbO comprises 5-60 mole %, R₂O constitutes 5-35 mole %, and P₂O₅ is present up to 85 mole %; and
(c) PbO + R₂O + B₂O₃ + P₂O₅ ≥ 95 mole %, wherein PbO comprises 5-30 mole %, R₂O constitutes 5-30 mole %, B₂O₃ comprises 5-20 mole %, and P₂O₅ makes up 15-85 mole %.

U. S. Patent Nos. 3,885,973; 3,935,018; 3,964,919 and 3,926,649 disclose glasses which may be suitable for co-processing with organic polymers to form composite articles of the type discussed in detail in Patent No. 3,732,181 supra, and U.S. Patent 5,043,369, discloses a glass polymer blend wherein the glass phase and the polymer phase are co-continuous, with the particles of each phase being simultaneously enclosed within larger regions of another phase (i.e., localized phase inversion/reversal.)

There continues to be a need for cost-effective, durable, flame-retardant glass polymer compositions having essentially uniform, fine-grained microstructure wherein the glass and polymer elements comprising the microstructure are of relatively uniform dimensions.

### SUMMARY OF THE INVENTION

Briefly, the inventions relates to glass/polymer tri-blends having essentially uniform, fine-grained microstructure in which preferably, the glass and polymer elements comprising the microstructure are of relatively uniform dimensions, and in which the glass interacts with the polymers to form alloys exhibiting a combination of the desirable properties of the glass and the polymers.

In particular, the invention relates to glass-polymer tri-blends containing two low temperature polymers, which blends exhibit excellent mechanical properties and flame retardance. The desirable properties of the glass-polymer blend of the invention are obtained by controlling the microstructure of the blend.

Fine glass microstructure (generally, less than 1 micron, with the largest particles being in the range of 1-5 microns), results in high flexural strength (greater than or equal to 20 (kpsi), while coarse microstructure (i.e. about 20 microns) results in an increase in flame retardance.

The present invention provides a glass/polymer blend comprising at least 65 wt% glass having a transition temperature below 350°C and two organic thermoplastic or high temperature polymers which are a polyarylsulfone or a polyarylethersulfane and a polyimine, the blend exhibiting thermal expansion in three directions (x, y, z) no greater than 95 *µ*m/m °C.

Articles of these glass/polymer triblends exhibiting an essentially uniform, fine-grained microstructure and having both good dimensional stability in three directions, as well as good flame retardance can be produced by:
(a) high shear dispersive mixing of finely-divided bodies of the inorganic glass and at the least two organic thermoplastic or thermosetting polymers at a temperature and viscosity represented by the working temperature of the glass and polymers to form a tri-blend glass polymer mixture; and
(b) shaping the tri-blend mixture into an article of a desired configuration.

In still another aspect, at least one of the organic thermoplastic or thermosetting polymer acts as a processing aid for ease of processing of the glass/polymer blend.

As used herein,
with respect to glass, "essentially non-hygroscopic" indicates that the glass component will demonstrate a weight gain of less than 1x10⁻⁶ grams/cm²/minute when exposed at 40°C to a relative humidity of 80%;
"blend" and "alloy" are used as such terms are defined by Leszek A. Utracki, in Polymer Alloys and Blends (1990), Part 1, pgs 1-3; thus, a "polymer blend" is a mixture of at least two polymers or copolymers and an "alloy" is an immiscible polymer blend having a modified interface and/or morphology; and
"excellent mechanical properties" means that the blend, among other things exhibits thermal expansion in three directions (x, y, z) no greater than 95 *µ* m/m °C, preferably less than 90 *µ*m/m °C; also, the ratio of the thermal expansion in the x, y directions is less than 2.0, and more preferably in the range of 1 to 2.0.

### DETAILED DESCRIPTION OF THE INVENTION

Suitable polymers for the glass/polymer triblends of the invention include Radel^{R} A (a polyarylethersulfone), and Radel^{R} R (a polyphenylsulfone), both available from Amoco Performance Products Inc., polyphenylsulfone and polyetherimide resins such as Ultem^{R}, available from General Electric. Other useful high temperature polymers include, ULTRASON^{R} S (a polysulfone) and ULTRASON^{R} E (a polyethersulfone), both available from BASF and Toatsu TPI^{R} (a thermoplastic polyimide available from Mitsui). Both Ultem^{R} and Radel^{R} are amorphous polymers which may be used to form transparent glass/polymer articles.

Two different Ultem polymers were tested. Both Ultem 1000 and Ultem 6000 exhibit high viscosities which account for difficult processing properties at high glass loadings. While Ultem 6000 has a higher molecular weight than Ultem 1000, and is more thermally stable, it is also more difficult to process. Ultem 1000 exhibits high dielectric strength, good chemical resistance, high heat resistance, good flame resistance, and excellent strength (144790 kPa (21,000 psi) flexural strength, and 103421 kPa (15,000 psi) tensile strength).

Radels offer excellent toughness, high heat deflection temperature, good electrical properties, high resistance to steam and boiling water temperatures, good creep resistance.

It is generally expected that in a single polymer/glass blend, as the glass loading increases, melt temperature has to be increased in order to lower torque and produce the desired microstructure. Also, glasses having lower softening points can generally be processed at lower temperatures. Surprisingly, it has been found that Radel^{R} A, when added to a glass/Ultem^{R} blend, acts as a processing aid. For example, in one example, a 65/35 wt% glass/Ultem^{R} blend required a torque of 55 to 65% and a pressure of 3447 kPa (500 psi) to process using an 18 mm Leistritz twin-screw extruder. When Radel^{R} A was added to form a higher glass loading blend of 70 wt% glass, 10 wt% Radel^{R}, and 20 wt% Ultem^{R}, the torque decreased to 41%, and the pressure fell to 3241 kPa (470 psi). In addition, the Radel ^{R}-containing tri-blend required the same or lower extrusion temperatures to process than the single polymer blend. In the single polymer blend, it is necessary to increase both the melt temperature and work in order to process higher glass loadings. Melt temperature is a function of the work put into the blend, and the equipment temperature. High melt temperatures are generally undesirable because as temperature increases, the risk of polymer degradation during processing also increases. It has been found that by adding Radel^{R} to a glass/polymer blend, glass loadings can be significantly increased while at the same time maintaining acceptable processing temperatures. In particular, Radel^{R} A improved the processing conditions (torque, work, melt temperature etc) of the blend, thus allowing for even higher glass loadings. The effect of Radel^{R} A on glass/polymer blends is shown in the Example below.

Any glass having a transition temperature below 350°C may be useful for the practice of the present invention. The glass should generally have the capability of interacting with the polymer so as to form bodies having essentially uniform, fine-grained microstructures and to desirably produce at least partial miscibility between the glass and polymer and/or a reaction and/or an attraction force between the glass and the polymer to promote adhesion and/or bonding therebetween; and should also exhibit excellent resistance to attack by moisture, that is, the glass must be essentially non-hygroscopic.

Examples of some preferred glass and glass-ceramics meeting the above characteristics are disclosed in US Patent Nos 4,874,724; 4,920,081; and 4,940,677, and 4,996,172.

Phosphate-based glasses have been shown to be particularly suited for glass-polymer alloys or blends due to their low transition temperatures. In addition, unlike silicates, borates and most other glass formers, phosphorus does not form carbides. Phosphate-based glasses exhibit higher coefficients of thermal expansion, matching the thermal expansion of some commercial polymers; and they are known to dissolve significant concentrations of hydrogen, ammonium and sulfide ions, as well as organics.

The glasses and/or precursor glasses used for the present invention exhibit transition temperatures below 350°C. Examples of such glasses are shown in Table 1 below. Because the sum of the constituents totals or closely approximates 100, for all practical purposes the individual values reported may be deemed to represent weight percent on the oxide basis. The actual batch ingredients may be any materials, either oxides or other compounds, which, when melted together will be converted into the desired oxide in the proper proportions. For example Na₂O, K₂O and BaO may be Na₂CO₃, K₂CO₃ and BaCO₃, respectively.

**TABLE 1**

| | K | W | Y |
|---|---|---|---|
| Li₂O | 5.3 | 5.8 | 7.6 |
| Na₂O | 8.0 | 8 | 9.4 |
| K₂O | 5.8 | 5.3 | 5.1 |
| P₂O₅ | 24.8 | 24.8 | 32.2 |
| ZnO | 40.7 | 39.2 | 41.5 |
| Al₂O₃ | 1.5 | 1 | 1.1 |
| SO₃ | 12.5 | 13.5 | -- |
| CaO | 0.7 | 0.7 | 1 |
| SrO | 0.7 | 0.7 | -- |
| BaO | -- | -- | 1 |
| WO₃ | -- | 1 | -- |
| SiO₂ | -- | -- | 1 |
| | | | |
| T_{g}(°C) | 300 | 317 | 333 |

Glasses K and W are durable sulfophosphate glasses; while glass Y is a tin-free, alkali-zinc-phosphate glass. To recover sufficient amounts of the glasses, the K and W glasses are sieved to -12 mesh, while the Y glass is sieved to -12 to +80 mesh. Prior to extrusion the glasses are dried overnight at 150 °C in a circulating air oven. Generally, the maximum sieving size will depend on the process capabilities such as the size of the melt blender.

The main object of glass polymer blends is to combine the properties of the glass with those of the polymers. As stated earlier, single polymer, glass-polymer blends are known which combine some advantageous properties of both components. However, in phosphate glass-polymer (single polymer) blends, it is typical to see both flexural and tensile strengths decrease as the glass loading increases. This is shown in the two-component systems of Table 2.

**TABLE 2**

| | K/ULTEM (wt.%) | | Y/ULTEM (wt.%) | | W/ULTEM (wt. %) | K/RADEL (wt. %) |
|---|---|---|---|---|---|---|
| | 50/50 | 65/35 | 50/50 | 65/35 | 65/35 | 50/50 |
| **MECHANICALS** | | | | | | |
| Flex PSI | 17284 | 14091 | 16029 | 14073 | 17271 | 10983 |
| Modulus MPSI | 0.8 | 0.8 | 1.03 | 1.17 | 1.15 | 0.76 |
| % Strain Peak Load | 2.8 | 1.6 | 2.1 | 1.3 | 1.7 | 2.6 |
| Tensile PSI | 9659 | 9188 | 8174 | 9271 | 9539 | 5083 |
| Modulus KSI | 808 | 1118 | 1060 | 1230 | 1042 | 768 |
| % Strain Break | --- | 0.972 | 1.01 | 0.853 | 1.048 | 1.68 |
| Notched Izod | 0.562 | --- | --- | 0.352 | 0.345 | -- |
| Limiting Oxygen Index | 57% | 62% | 68% | 85% | 68% | 53% |
| Expansion in 3D at 150°C µm/m°C | 121.4 | 108.6 | 109.9 | 98.9 | 119.9 | 135.6 |

At a glass loading of 50 weight %, these single polymer blends exhibited a fine grain morphology in which glass spheres measuring less than 10 microns in size are uniformly dispersed through the polymer matrix. A comparison of the 50/50 blends of the K glass with Ultem and Radel, shows higher flexural and tensile strengths for the Ultem blend than for the Radel blend. Without intending to be bound by theory, it is believed that the higher strength of the K/Ultem blend is due to the fact that Ultem has a higher mechanical strength and viscosity than Radel. As a result of the high viscosity of Ultem however, higher glass loadings with this polymer are difficult to process by injection molding or by mold filling techniques. Ultem also results in blends having a lower glass/polymer adhesion than is observed in a blend using Radel. Scanning electron micrographs of a K/Ultem blend, show small glass spheres in the polymer matrix. This microstructure, showing little or no adhesion, is referred to herein as a "ball and socket" microstructure.

For the K glass/Ultem blend, as the glass loading increases from 50 to 65 wt.%, the tensile strength decreases from (63349 kPa to 66596 kPa) (9659 psi to 9188 psi), while the flexural strength decreases from 119169 kPa (17284 psi) to 97154 kPa (14091 psi). A similar trend is observed for the Y/Ultem blend where the flexural strength decreased from 110516 kPa (16029 psi) to 197030 kPa (14073 psi) as the glass loading is increased from 50 to 65 wt%. In addition to the processing limitations described above, poor adhesion is also a major disadvantage of a single polymer glass/Ultem blend. Scanning electron micrographs of the Ultem blends of Table 2, show small glass spheres resting on the Ultem matrix. There is little or no evidence of adhesion in the microstructure. This type of microstructure is termed "ball and socket".

Scanning electron micrographs of a 50/50 (wt percent) K/Radel blends show that unlike what is observed in the K/Ultem blends, the K/Radel blends exhibit good glass polymer adhesion. However, as the glass loading is increased from 50 to 70 wt%, glass coalescence is observed and physical properties become increasingly unacceptable.

Surprisingly, unlike the single polymer blends observed above, for the tri-blend system according to the present invention, little or no adverse effect on the flexural and tensile strengths has been observed at higher glass loadings. It is believed that this may be due to the presence of finer particle size distributions in the present blend than those found in a single blend. This is illustrated in Tables 3 and 4 below. The glass/Radel/Ultem blend of the invention combines the high adhesion properties of Radel and the high physical properties of Ultem, resulting in a blend whose physical properties are better than the properties of glass/polymer blends having only a single polymer.

**TABLE 3**

| | | K/RADEL/ULTEM (wt.%) | | W/RADEL/ULTEM (wt.%) | |
|---|---|---|---|---|---|
| | 50/21/29 | 65/10/25 | 65/17.5/17.5 | 70/10/20 | 75/8.5/16.5 |
| **MECHANICALS** | | | | | |
| Flex PSI | 15190 | 15706 | 12688 | 15903 | 18105 |
| Modulus MPSI | 0.82 | 1.82 | 1.24 | 1.88 | 2.47 |
| % Strain Peak Load | 3.5 | 0.9 | 1.3 | 0.9 | 0.6 |
| Tensile PSI | 8102 | 8681 | 8331 | --- | 10424 |
| Modulus KSI | 1038 | 2213 | 1441 | --- | 3020 |
| % Strain Break | 1.39 | 0.413 | 0.689 | --- | 0.371 |
| Notched Izod | --- | 0.423 | 0.689 | --- | --- |
| Limiting Oxygen Index | 52% | --- | --- | 67% | --- |
| Expansion in 3D at 150°C µm/m°C | 127 | 87.8 | 92 | 96.5 | 78.9 |
| x,y Ratios for Expansion Isotropy 180°C-200°C | 1.02 | 2.15 | 1.27 | 1.86 | 1.61 |
| Microstructure | Fine | Fine | Fine | Fine/Slight Elongation | Very Thin Structure |

**TABLE 4**

| Y/RADEL/ULTEM (wt.%) | | | | | |
|---|---|---|---|---|---|
| | 70/10/20 | 73/9/18 | 70/15/15 | 70/12/18 | 67/11/22 |
| **MECHANICALS** | | | | | |
| Flex PSI | 17830 | 14307 | 12470 | 14255 | 14161 |
| Modulus MPSI | 2.47 | 2.83 | 1.42 | 2.02 | 1.6 |
| % Strain Peak Load | 0.7 | 0.5 | 1 | 0.7 | 1 |
| Tensile PSI | 12569 | 9452 | 6969 | 9088 | 7252 |
| Modulus KSI | 2655 | 3095 | 1688 | 2135 | 1534 |
| % Strain Break | 0.529 | 0.32 | 0.453 | 0.468 | 0.515 |
| Limiting Oxygen Index | 94+% | --- | --- | --- | --- |
| Expansion in 3D at 150°C µm/m°C | 57.9 | 71.4 | 84.4 | 85.5 | 84.2 |
| x,y Ratios for Expansion Isotropy 180°C-200°C | 1.44 | 1.33 | 1.24 | 1.55 | 1.19 |
| Microstructure | Very Fine Structure | Coalesced | Large Glass Spheres | --- | Fine |

Even at glass loadings of 65 wt% or greater, two-polymer blends according to the invention exhibit strengths equivalent to or exceeding those of two component systems. As shown in Table 2 above, 50/50 Y/Ultem and 65/35 Y/Ultem shows a decrease in both flexural and tensile strengths. By contrast, as shown in Table 4, in the inventive blend a significant increase in flex, tensile and modulus values occurs in a 70 wt% Y blend with 10 wt% Radel/20 wt% Ultem.

The properties of the glass/polymer tri-blend of the invention depends on the respective properties of the glass and the polymers. In addition, the glass/polymer properties depend on the glass loading (i.e. the ratio of glass to polymers), as well as the ratio of one polymer to the other in the blend. Thus, to provide glass/Ultem blends having good processing properties as well as good adhesion, I have found that small additions of Radel to a glass/Ultem blend, provides a tri-blend of improved adhesion and significantly improved ease of processing. Besides ease of processing and good glass/polymer adhesion, the tri-blends of the invention exhibit excellent dimensional stability, high flame retardance as measured by the limiting oxygen index, as well as good isotropic behavior. In addition, blends having significantly high glass loadings can be processed by adding Radel to a glass/Ultem blend.

The coefficient of thermal expansion (CTE) in three directions (x, y, z) should be no greater than 95 *µ*m/m °C. As shown in Table 2, to obtain CTEs approaching this value requires glass loadings in excess of 65%. As stated earlier, due to processing limitations, it is difficult to obtain single polymer glass/polymer blends of acceptable strengths at high glass loadings. For the blends according to the invention shown in Tables 3 and 4, it has been shown that a CTE of 90 *µ*m/m °C or less is readily achieved at glass loadings of 65 wt% or greater, which glass loadings are attained by using Radel as a processing aid. Thus, by combining Radel and Ultem in the glass/polymer blends of the invention, higher glass loadings can be processed. It is believed that the low levels of Radel in such a blend acts as a processing aid for the blend. It is believed that the Radel^{R} starts to melt sooner than the other components and lubricates the glass. The advantageous effects of Radel in the glass/polymer blends according to the invention are illustrated in Example 1 below. Thermal expansion coefficients are measured in the x, y and z directions, with the x, y directions showing the degree of isotropy. Since Ultem is an amorphous polymer, its properties are isotropic but become anisotropic as the level of fillers increases. However, the inventive tri-blends are unique in that the blends remain isotropic even at high gloss loadings. As used herein, an x, y ratio less than 2.0 suggests some isotropic behavior, while a ratio of less than 1.5 is deemed outstanding. The ratio of thermal expansion coefficients in the x and y directions for the glass/Radel/Ultem blends of the invention are in the range of 1.02 to 2.15. The cause of this is not known, however, it has been found that blends with fine microstructure tend to be more isotropic than blends with larger glass particles.

Flame retardance is also dependent on glass loading. A significant increase in limiting oxygen index is observed with a 15 wt% glass loading increase. Additional glass in the system, made possible by processing with Radel, will further enhance flame retardant properties. As shown in the tables above, both limiting oxygen index and dimensional stability improve as glass loading increases. Glass loadings of 65 wt% or higher are preferred for these properties.

As described above, several advantages result from adding low levels of Radel to the glass/Ultem system. The high viscosity of Ultem restricts the glass loadings to 65 wt% in single polymer systems. It has been found that glass loadings up to 85 wt% can be melt blended with Ultem and low levels of Radel to obtain glass/polymer blends which, in addition to having unique processing properties, exhibit such properties as good polymer/glass adhesion, high glass loadings, excellent dimensional stability, excellent flame retardance as measured by limiting oxygen index, isotropic behavior, and good strength.

It has also been found that desirable properties and blend morphology of the inventive tri-blends can be obtained by varying the ratio of Radel to Ultem in the blends. For example, flexural strength, tensile strength and moduli tend to decrease as the ratio approaches 1. On the other hand, as the ratio of Radel/Ultem approaches 1, the blend toughness tends to increase. Therefore, the most appropriate Radel/Ultem ratio will depend on the desired blend properties. This will also depend on the particular glass/polymer combination.

Articles made from the glass/polymer tri-blends of the invention are of special interest in the area of precision molded parts and products requiring high dimensional stability (i.e. dimensions as well as shape retention). Articles made from the blends according to the invention may also find application in the fabrication of such products as light weight, scratch resistant and impact resistant cookware for both microwave and conventional oven use. As stated, such products will desirably exhibit dimensional stability in three directions, as well as good flame retardance as measured by the limiting oxygen index.

### DESCRIPTION OF THE PREFERRED EMBODIMENTS

Each glass is compounded from oxide, carbonate and phosphate batch materials. The batch materials are automatically tumble-mixed or ballmilled and melted in silica crucibles at temperatures in the vicinity of 1000°C for times of about three hours. Very little volatilization of P₂O₅ fluoride or other species was noted. Analyzed values of P₂O₅ were typically only a few tenths percent below that calculated from the batch.

Articles of glass/polymer blend materials of the inventions may be formed by:
(a) compounding glass materials from oxides, carbonates, phosphates, or their precursors to form a glass batch material;
(b) melting the glass batch material at a temperature of about 1000°C;
(c) drying and finely-dividing the glass batch materials to form fragments or pellets of glass having a transition temperature below 350°C;
(d) combining the fragments or pellets of glass with pellets or powders of two organic polymers as defined above to form a glass/polymer batch;
(e) feeding glass/polymer batch into an extruder at a temperature in the range of 300°-450°C to form the glass/polymer tri-blend; and
(f) mixing and extruding the tri-blend into strands of materials.

The glass/polymer tri-blend contains at least 65 wt percent glass.

In a preferred embodiment, the two polymers are polyarylsufone and polyetherimide in a weight ratio no greater than 1, preferably in the range of 0.2 to 1.0, more preferably in the range of 0.4 to 0.75.

In another preferred embodiment, the two polymers are polyarylethersulfone and polyetherimide and the weight ratio of the former to the latter is in the range of 0.2 to 1.2, more preferably in the range of 0.4 to 1.0.

Where a pulverized material is desired to form feedstock for extrusion, the melts are poured through patterned metal rollers to produce ribbons having a textured surface which can be easily crushed to predetermined-sized fragments. More preferably, for such applications, the melts can be poured as a fine stream into a bath of cold water, a practice termed "drigaging". If desired, the glass particles/fragments may further be pelletized for ease of handling.

After thorough drying, the finely-divided fragments/pellets of glass and pellets or powders of organic polymer are fed into a twin screw extruder which can be programmed to operate at temperatures between about 300°-450°C, or temperatures at which the glasses exhibit a viscosity within the range of about 10³-10⁶ Pas (10⁴-10⁷ poises). The high shear forces generated in the extruder assure very fine melt mixing at those viscosities. The so-mixed material can then be extruded into strands of spaghetti-like materials which are characterized by having substantial porosity.

If desired, the extrudate can be pelletized, thoroughly dried and fed into an injection molding machine. Depending upon the glass composition and the polymer involved, the injection molder can be programmed to operate at temperatures ranging from about 300°-430°C and at pressures in excess of (10 3421 kPa) (15,000 psi).

### EXAMPLE

To demonstrate the effect of Radel in the glass/polymer tri-blend of the invention, a 65/35 Y/Ultem blend was combined in an extruder. The glass/polymer blend was intimately mixed to ensure production of essentially uniform, fine-grained microstructures which is best accomplished through high shear dispersive mixing, preferably using a twin screw extruder.

For the 65/35 Y/Ultem blend, torque on the extruder ranged from about 55 to 60%. Torque in excess of 50% is generally unacceptable as it places undue stress on the equipment. By adding a small amount of Radel to form a 70/10/20 Y/Radel/Ultem tri-blend, the torque on the extruder was reduced to about 40%. In another example, similar advantageous effects were seen in injection molding applications using a 75/8.5/16.5 W/Radel/Ultem tri-blend.

To prepare the tri-blend, Ultem pellets, significantly larger in particle size than Radel or glass, were loaded into a first feeder. Then, a mixture of Radel and glass was loaded into a second feeder. Calibrated amounts of Ultem and the Radel/glass mixture are then fed into an extruder at a calculated rate. For example, to process the 70/10/20 tri-blend, the feeders were set at a rate such that 6 grams of Ultem, 3 grams of Radel, and 21 grams of the Y glass are fed into the extruder. This was accomplished by thoroughly mixing 87.5 % of the glass and 12.5 % Radel in the second feeder, and calibrating this second feeder to feed the glass/Radel mixture at a rate of 24 grams per minute.

## Claims

1. A glass/polymer blend comprising at least 65% glass having a transition temperature below 350°C, and two organic thermoplastic or high temperature polymers which are a polyarylsulfone or a polyarylether sulfone and a polyetherimide, the blend exhibiting thermal expansion in three directions (x,y,z) no greater than 95 *µ*m/m°C.

2. A glass/polymer blend according to claim 1, wherein the polymer is amorphous.

3. A glass/polymer blend according to claim 1 or 2, wherein the organic polymers comprise polyarylsulfone and polyetherimide in a ratio of polyaryl sulfone to polyetherimide no greater than 1.

4. A glass/polymer blend according to claim 3, wherein the ratio is 0.4 to 0.75.

5. A glass/polymer blend according to claim 1 or 2, wherein the organic polymers comprise polyarylether sulfone and polyetherimide in a ratio of 0.4 to 1.0.

6. A glass/polymer blend according to any of claims 1 to 5, wherein the ratio of the thermal expansion in the x,y directions is less than or equal to 2.0.

7. A glass/polymer blend according to claim 6, wherein the ratio of thermal expansion in the x,y directions is in the range 1 to 2.0.

8. A glass/polymer blend according to any of claims 1 to 7, wherein one of the polymers acts as a processing aid in the blend.

## Patentansprüche

1. Glas-/Polymer-Gemisch, das mindestens 65% Glas mit einer Übergangstemperatur unter 350° C aufweist, sowie zwei organische thermoplastische und Hochtemperatur-Polymere, die ein Polyarylsulfon oder ein Polyarylethersulfon und ein Polyetherimid sind, wobei das Gemisch eine Wärmeausdehnung in drei Richtungen (x, y, z) von nicht größer als 95 µm/m°C aufweist.

2. Glas-/Polymer-Gemisch nach Anspruch 1, wobei das Polymer amorph ist.

3. Glas-/Polymer-Gemisch nach Anspruch 1 oder 2, wobei die organischen Polymere Polyarylsulfon und Polyetherimid in einem Verhältnis von Polyarylsulfon zu Polyetherimid von nicht größer als 1 enthalten.

4. Glas-/Polymer-Gemisch nach Anspruch 3, wobei das Verhältnis 0,4 bis 0,75 ist.

5. Glas-/Polymer-Gemisch nach Anspruch 1 oder 2, wobei die organischen Polymere Polyarylethersulfon und Polyetherimid in einem Verhältnis von 0,4 bis 1,0 enthalten.

6. Glas-/Polymer-Gemisch nach einem der Ansprüche 1 bis 5, wobei das Verhältnis der Wärmeausdehnung in den x, y ― Richtungen weniger oder gleich 2,0 ist.

7. Glas-/Polymer-Gemisch nach Anspruch 6, wobei das Verhältnis der Wärmeausdehnung in den x, y ― Richtungen im Bereich von 1 bis 2,0 liegt.

8. Glas-/Polymer-Gemisch nach einem der Ansprüche 1 bis 7, wobei eines der Polymere als Verarbeitungshilfsmittel in dem Gemisch wirkt.

## Revendications

1. Un mélange verre/polymère comprenant au moins 65 % de verre ayant une température de transition inférieure à 350°C, et deux polymères organiques thermoplastiques ou pour hautes températures qui sont une polyarylsulfone ou une polyaryléthersulfone et un polyétherimide, le mélange présentant une dilatation thermique dans trois directions (x, y, z) non supérieure à 95 µm/m°C.

2. Un mélange verre/polymère selon la revendication 1, dans lequel le polymère est amorphe.

3. Un mélange verre/polymère selon la revendication 1 ou 2, dans lequel les polymères organiques comprennent une polyarylsulfone et un polyétherimide en un rapport de la polyarylsulfone au polyétherimide non supérieur à 1.

4. Un mélange verre/polymère selon la revendication 3, dans lequel le rapport est de 0,4 à 0,75.

5. Un mélange verre/polymère selon la revendication 1 ou 2, dans lequel les polymères organiques comprennent une polyaryléthersulfone et un polyétherimide dans un rapport de 0,4 à 1,0.

6. Un mélange verre/polymère selon l'une quelconque des revendications 1 à 5, dans lequel le rapport des dilatations thermiques dans les directions x, y est inférieur ou égal à 2,0.

7. Un mélange verre/polymère selon la revendication 6, dans lequel le rapport des dilatations thermiques dans les directions x, y est compris dans l'intervalle de 1 à 2,0.

8. Un mélange verre/polymère selon l'une quelconque des revendications 1 à 7, dans lequel l'un des polymères agit comme un adjuvant de transformation dans le mélange.
